# EUROPÄISCHE PATENTSCHRIFT

(11) **EP 1 493 285 B1**
(45) Veröffentlichungstag und Bekanntmachung des Hinweises auf die Patenterteilung: **20.03.2013**
(21) Anmeldenummer: 03722249.4
(22) Anmeldetag: 01.04.2003
(51) Int. Cl.: H04Q 3/00, H04Q 11/04

(54) **CALL HOLD / TERMINAL PORTABILITY IN H.323/ISUP-BICC-SIP NETZEN**
CALL HOLD / TERMINAL PORTABILITY IN H.323/ISUP-BICC-SIP NETWORKS
MISE EN ATTENTE/PORTABILITE DE TERMINAL DANS DES RESEAUX H.323/ISUP-BICC-SIP

(30) Priorität: 11.04.2002 DE 10215974; 12.04.2002 DE 10216282; 19.07.2002 DE 10232943
(43) Veröffentlichungstag der Anmeldung: 05.01.2005
(73) Patentinhaber: Nokia Siemens Networks GmbH & Co. KG, 81541 München (DE)
(72) Erfinder: HOFFMANN, Klaus, 81735 München (DE); LÜKEN, Joachim, 80686 München (DE)
(86) Internationale Anmeldenummer: PCT/DE2003/001074
(87) Internationale Veröffentlichungsnummer: WO 2003/088685

(56) Entgegenhaltungen:
- WO-A-01/84790
- US-A1- 2001 030 968

## Beschreibung

Die Erfindung betrifft Telekommunikationsnetze, vorzugsweise multimediale, digitale Netze der Internet-Telefonie, bei denen Teilnehmer mit Geräten unterschiedlicher Hersteller und unterschiedlicher Funktionalität über verschiedene Protokolle bzw. unterschiedliche Protokollfamilien miteinander in Datenaustausch treten.

Bei der Internet Telefonie stellen die Endgeräte der Teilnehmer eine IP-Verbindung (Internet Protocoll Verbindung) zu dem Gerät des Partnerteilnehmers her und übertragen die Sprachdaten als codierte Datenpakete über das Internet.

Damit das Netzwerk Verbindungen aufbauen, überwachen und beenden kann, ist es notwendig, neben den Teilnehmer- oder Nutzerdaten auch noch Signalisierungsdaten auszutauschen. Grundsätzlich unterscheidet man hier zwischen einem Signalisierungskanal, der zur Übertragung von oben erwähnten Signalisierungsdaten bestimmt ist, und einem Nutzkanal, der auch Bearer oder Medium genannt wird.

Es gibt zwei Signalisierungsmodelle: einerseits das Channel Associated Signalling, CAS, auch Innenband Signalisierung genannt, bei dem die Signalisierungsdaten über das gleiche Netz wie die Nutzerdaten übertragen werden und andererseits das Common Channel Signalling, CCS, auch Außenband Signalisierung genannt, bei dem die Signalisierungsdaten über ein separates Netz übertragen werden. Das hat den Vorteil, daß der Signalisierungskanal hinsichtlich der Datenübertragung optimiert werden kann, um insgesamt eine höhere Datenübertragungsrate zur Verfügung zu stellen. Auch können Signalisierungsinformationen während einer bestehenden Sitzung oder Verbindung ausgetauscht werden.

Die vorliegende Erfindung bezieht sich auf CCS-Systeme, bei denen vorzugsweise zumindest einer der Nutzkanäle und der davon getrennte Signalisierungskanal auf IP-Netzen basiert.

In dem Zugangsnetzwerk gibt es einen Kanal der die Übertragungskanäle kontrolliert. Der ISDN Basisanschluß bietet beispielsweise zwei sogenannte B-Kanäle, über die Nutzdaten mit einer Übertragungsrate von 64Kbit/s ausgetauscht werden und einen D-Kanal zur Steuerung, der mit einer Datenübertragungsrate von 16Kbit/s Signalisierungsdaten überträgt.

Von der ITU-T (International Telecommunications Union, Bereich Telekommunikation) und von der Internet Engineering Task Force (IETF) sind bisher mehrere, teilweise miteinander konkurrierende Modelle oder Protokolle für sogenannte "Voice-over-IP" Netze entwickelt worden.

Die ITU-T definiert in der H.323 Empfehlung den grundlegenden Standard für den Transport von Sprache, Daten und Videoströmen über ein IP-Netzwerk. H.323 benutzt RTP/RTCP als Trägerprotokoll für Audio- und Videoströme und H.225 als Protokoll für die Anrufkontrolle, also unter anderem die Signalisierung, Registrierung und die Synchronisation von Medienströmen.
H.323 sieht vornehmlich folgende Geräte vor:
- ein Terminal, das als Endgerät in einem Local Area Network (im folgenden LAN genannt) fungiert, das zur Zwei-Wege-Kommunikation in Echtzeit mit einem anderen Endgerät ausgelegt ist;
- ein Gateway oder Media Gateway (im folgenden kurz MG bezeichnet), das den Sprachinhalt verarbeitet und gegebenenfalls weiterleitet;
- ein Gatekeeper, der der Anrufkontrolle dient oder
- Media Gateway Controller (kurz MGC), der dem Teilnehmer die Dienste anbietet.

Grundsätzlich kommunizieren mindestens zwei Teilnehmer über Endgeräte, die zur Zwei-Wege-Kommunikation in Echtzeit ausgelegt sind. Die beteiligten Gateways können hierbei über die ihnen zugeordneten Media Gateway Controller gesteuert werden.

Diese Gateways und Gateway Controller können auch zwischen unterschiedlichen paketorientierten Datennetzen angeordnet sein, in denen z.B. die Protokolle der SIP Familie oder die der H.323 Familie zum Einsatz kommen.

Für die Netzwerksteuerung in Voice-Over-IP Netzen (kurz VoIP) gibt es mehrere alternative Standards. Das heisst, daß für die Kommunikation zwischen MG und MGC das Media Gateway Controll Protocoll (MGCP) eingesetzt werden kann oder alternativ MEGACO bzw. das H.248 Protokoll oder gleich wirkende Protokolle.

Bei dem von der IETF entwickelten MGCP-Konzept liegt die zentrale Intelligenz des Netzes bei dem MGC. Alle Zustandsänderungen werden dem MGC durch eine Serie von relativ einfachen Befehlen mitgeteilt und der MG kann gegebenenfalls Aktionen auf Befehl des MGC ausführen.

Die IETF veröffentlichte mit dem Session Initiation Protocoll (im folgenden SIP) einen zu H.323 alternativen Standard für die Internet-Telefonie und stellt damit ein Tool dar, um interaktive Verbindungen über das Internet bereitzustellen. Auf Anwendungsebene wird hier das H.323 Protokoll durch das SIP ersetzt. SIP unterstützt die Steuerung einer Verbindung und die Übersetzung von SIP-Adressen in IP-Adressen. SIP basiert hingegen auf relativ intelligenten Endpunkten, die die Signalisierungsaufgabe selbst übernehmen. Bei einem Call-Setup kommt dann ein Proxy-Server zum Einsatz, wenn sich die in Verbindung stehenden Endpunkte nicht kennen. Er kann dafür ausgelegt sein, einen empfangenen Request für einen Client, z.B. ein IP-Telefon, eine PC oder ein PDA, nach einer Bewertung und Änderung weiterzugeben.

Das herkömmliche Telefonsystem ist im Gegensatz zu der Internet-Telefonie ein leitungsvermitteltes Netz (Public Switched Telephony Network, PSTN), das auf der Kommunikation über Vermittlungsstellen basiert.

Damit nun nicht nur IP-basierte Geräte untereinander und PSTN-kompatible Geräte untereinander kommunizieren können ist es notwendig, daß einerseits IP-Telefone untereinander (auch wenn sie nach unterschiedlichen Protokollen arbeiten, wie z.B. bei dem erfindungsgemäßen Interworking von H.323 und SIP) und andererseits IP-Telefone mit leitungsvermittelten Endgeräten zusammen arbeiten können (wie z.B. bei dem erfindungsgemäßen Interworking von PSTN und SIP).

Um einen möglichst komplexen Einsatzbereich und einen reibungslosen Ablauf zu gewährleisten, ist ein Interworking zwischen den jeweiligen Protokollen (SIP und H.323 und gegebenenfalls Protokollen, die in PSTN Netzen eingesetzt werden, wie z.B. das ISUP, ISDN User Part) bei möglichst gleichbleibender Funktionalität notwendig.

Aus Sicht des Teilnehmers ist unter anderen Gesichtspunkten die Funktionalität des Endgerätes und damit die zur Verfügung gestellten Leistungsmerkmale entscheidend, auf die er zurückgreifen kann. Hier sind beispielsweise folgende (auch features genannte) Merkmale zu nennen: Call Waiting (Anklopen), Lautsprechen, Wahlwiederholung, das Trennen, das Umlegen, die Rufweiterleitung etc.

Ein solches Verfahren und System ist z.B. offenbart in WO 01 84790 A.

Bei diesem Leistungsmerkmalen kann man zwischen zwei Klassen unterscheiden: 1. Leistungsmerkmale, die eine Auftrennung des Nutzkanals erfordern und 2. solchen, die keine Auftrennung erfordern.

Die Erfindung betrifft Leistungsmerkmale der ersten Klasse, vorzugsweise die Merkmale "Call Hold" und "Terminal Portability", die eine zeitlich befristete Unterbrechung einer bestehenden Verbindung ermöglichen, gegebenenfalls mit Unterbrechung des Payloadstromes.

Eine Auftrennung des Nutzkanals oder der Nutzkanäle wird bei herkömmlichen PSTN Netzen lokal durchgeführt, also in der Vermittlungsstelle des Teilnehmers, der das Leistungsmerkmal angefordert hat.

In SIP-basierten Netzen ist eine Auftrennung des Nutzkanals nur teilweise lokal vorgesehen, nämlich nur für die eigene Senderichtung.

Damit können die Leistungsmerkmale, die eine vollständige Auftrennung des Nutzkanals erfordern (also in Sende- und Empfangsrichtung) bei einem SIP-Teilnehmer im Interworking mit PSTN und/oder H.323 und BICC bisher nicht durchgeführt werden.

Aufgabe der vorliegenden Erfindung ist es daher, ein Verfahren für ein Interworking zwischen einem ersten Protokoll (SIP) und einem zweiten Protokoll (H.323 oder PSTN) zu ermöglichen, wobei das erste Protokoll (SIP) in paketorientierten Netzen (IP-Netzen) eingesetzt wird. Dies soll gegebenenfalls im Interworking mit einem dritten Protokoll (BICC) gewährleistet sein, auf dem die Signalisierung basiert und das funktional zwischen dem ersten und dem zweiten Protokoll angeordnet ist.

Weiterhin ist es wünschenswert, den Teilnehmern möglichst viele Leistungsmerkmale zur Verfügung zu stellen, vorzugsweise einer Gruppe von ersten Teilnehmern, die nach dem ersten Protokoll (SIP) arbeiten, Leistungsmerkmale zur Verfügung zu stellen, auf Teilnehmer in PSTN Netzen zurückgreifen können und die eine Auftrennung der Nutzkanäle erfordern in einem Interworking von H.323 bzw. PSTN und BICC.

Diese Aufgabe wird durch ein Interworkingverfahren zwischen mehreren Protokollen gelöst, vorzugsweise einem ersten Protokoll, nachdem ein erster Teilnehmer arbeitet und einem zweiten Protokoll, nachdem ein zweiter Teilnehmer arbeitet eines digitalen, multimedialen Kommunikationsnetzes, bei dem
- eine Verbindung zwischen zwei oder mehr Teilnehmern zumindest einen Nutzkanal in Sende- und Empfangsrichtung umfaßt,
- bei dem das erste Protokoll zur Signalisierung in paketorientierten oder IP-basierten Netzen ausgelegt ist und für Leistungsmerkmale, die eine Auftrennung des Nutzkanals erfordern, nur eine lokale Auftrennung des jeweiligen Nutzkanals in Senderichtung vorsieht und
- bei dem das zweite Protokoll für Leistungsmerkmale, die eine Auftrennung des Nutzkanals erfordern, zumindest optional eine lokale Auftrennung des jeweiligen Nutzkanals in Senderichtung vorsieht und bei dem auch dem ersten Teilnehmer eine Menge von Leistungsmerkmalen zur Verfügung gestellt wird, vorzugsweise solche Leistungsmerkmale, die eine Auftrennung des jeweiligen Nutzkanals in Sende- und Empfangsrichtung erfordern, indem das zweite Protokoll um einen Befehlssatz zur nicht-lokalen Auftrennung des jeweiligen Nutzkanals in die Empfangsrichtung hinsichtlich des ersten Teilnehmers erweitert wird oder indem der zweite Teilnehmer insofern modifiziert gesteuert wird, als daß das Senden in Richtung des ersten Teilnehmers, vorzugsweise das Senden eines Mediastromes, unterbrochen wird.

Weiterhin wird diese Aufgabe gelöst von einem Protokollkonverter gemäß Anspruch 17.

Auch das in Anspruch 22 bezeichnete Netzwerksystem ist zur Lösung dieser Aufgabe ausgelegt.

Die erste, bevorzugte Ausführungsform der Erfindung bezieht sich auf ein Interworking zwischen dem SIP Protokoll als erstes Protokoll zur Signalisierung in IP-basierten Netzen und dem BICC oder dem ISUP+ als weiteres Protokoll über das die Verbindung zu einem zweiten Teilnehmer aufgebaut wird, der beispielsweise ein analoger Teilnehmer in einem PSTN Netz oder ein ISDN Teilnehmer sein kann.

Die zweite, bevorzugte Ausführungsform der Erfindung bezieht sich auf ein Interworking zwischen dem SIP Protokoll als erstem Protokoll zur Signalisierung in IP-basierten Netzen und dem H.323 als zweitem Protokoll, das ebenfalls zur Signalisierung in erwähnten IP-Netzen ausgelegt ist. In dieser Ausführungsform liegen dann beide Teilnehmer im IP-Bereich.

In beiden bevorzugten Ausführungsformen findet das Interworking der jeweils genannten Protokolle mittelbar statt, nämlich durch Zugriff auf ein weiteres, drittes Protokoll, vorzugsweise dem BICC (Bearer Independent Call Control). Alternative Ausführungsformen zu den beiden genannten sehen jedoch vor, das Interworking unmittelbar zu gestalten, also direkt und ohne den Einsatz von BICC.

Auch eine Kombination der beiden Ausführungformen wird durch das erfindungsgemäße Verfahren abgedeckt, so daß ein Interworking von SIP einerseits und H.323 und ISUP andererseits unter Einsatz von BICC erfolgt.

Die Erfindung betrifft im allgemeinen ein Interworking von PSTN-basierten Protokollen (z.B. dem ISUP, in der ersten Ausführungsform) bzw. (in der zweiten Ausführungsform) von der H.323 Protokollfamilie, die insbesondere auch die Protokolle H.225, H.248 und H.450 umfasst, mit einem Interworking zu den Protokollen SIP und bevorzugterweise BICC.

Die Kommunikation zwischen den Media Gateway Controllern und damit auch das Interworking zwischen den Protokollen findet vorzugsweise über das dritte Protokoll, das BICC CS2 (bearer independent call controll capability set 2) statt.

Alternativ zu BICC kann hier das ISUP+ eingesetzt werden. Damit wird erfindungsgemäß ein Interworking zwischen den Protokollen SIP, H.323 oder ISUP, ISUP+ oder BICC ermöglicht.

Da bei der ersten Ausführungsform die jeweiligen Teilnehmer unterschiedlichen Netztypen (IP und PSTN) angehören, werden Media Gateways als Mittler eingesetzt. Dies ist bei der zweiten Ausführungsform der Erfindung nicht notwendig, da beide Teilnehmer hier dem IP-Netz angehören.

Im ersten Fall erfolgt die Kommunikation zwischen dem MGC und dem MG vorzugsweise über das MGCP Protokoll. Alternativ zu dem Media Gateway Controll Protocoll kann hier das H.248 Protokoll oder ein gleich wirkendes Protokoll vorgesehen sein.

Als MG wird in der bevorzugten Ausführungsform hiG1000 und als MGC hiQ9200 eingesetzt.

Weitere Vorteile, Merkmale und alternative Ausführungsformen der Erfindung sind in der nachfolgenden, detaillierten Figurenbeschreibung zu finden, die in Zusammenhang mit der Zeichnung zu lesen ist und in der:
- Fig. 1: eine schematische Darstellung einer bekannten VoIP-Kommunikation zwischen einem PSTN und einem IP Netz,
- Fig. 2: die in Figur 1 gezeigten Elemente durch ein zusätzliches, erfindungsgemäßes SIP Interworking erweitert,
- Fig. 3: erfindungsgemäße Befehle zwischen einem ersten SIP-Teilnehmer und einem zweiten PSTN-Teilnehmer und zwischengelagerten Netzelementen,
- Fig. 4: erfindungsgemäße Befehle zwischen einem ersten SIP-Teilnehmer und einem zweiten H.323-Teilnehmer und zwischengelagerten Netzelementen und
- Fig. 5a: eine schematischen Darstellung einer Auftrennung eines Nutzkanals in Sende- und Empfangsrichtung nach dem Stand der Technik, wenn zwei PSTN Teilnehmer kommunizieren und einer ein Leistungsmerkmal in Bezug zu dem anderen Teilnehmer initiiert und
- Fig. 5b: eine schematischen Darstellung der erfindungsgemäßen Auftrennung des Nutzkanals in Sende- und Empfangsrichtung, wenn ein SIP Teilnehmer das Leistungsmerkmal im Hinblick auf einen H.323 Teilnehmer oder einen PSTN Teilnehmer initiiert
zeigen.

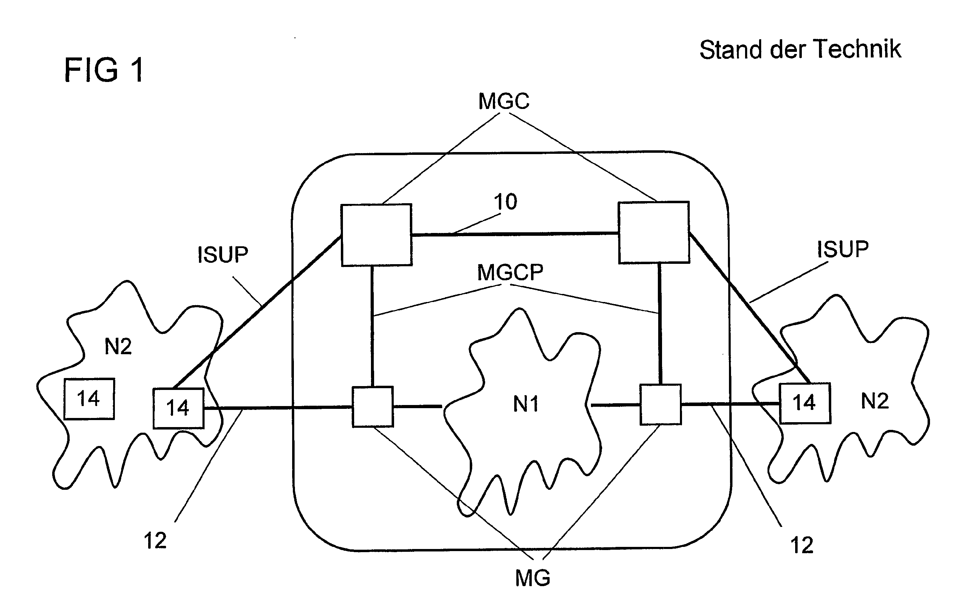

Figur 1 zeigt das grundlegende, aus dem Stand der Technik bekannte Szenario einer VoIP-Kommunikation und einer Außenbandsignalisierung, bei der also ein Signalisierungskanal 10 von einem Nutzkanal 12 getrennt ist.

Teilnehmer eines PSTN Netzes N2 treten über die jeweiligen Endgeräte 14 mit anderen Teilnehmern über einen Nutzkanal 12, der über ein paket-orientiertes Netz, vorzugsweise das Internet N1, geleitet bzw. vermittelt wird, in Verbindung.

Bei PSTN Netzen wird als Außenbandsignalisierung vorzugsweise das ISUP eingesetzt. Hier sind jedoch auch andere, gleich wirkende Protokolle, vorzugsweise das TUP (Telephone User Part) u.ä. einsetzbar.

Bei IP-Netzen (wenn, wie in der zweiten Ausführungsform der Erfindung, beide Teilnehmer dem IP-Netz angehören) erfolgt die Signalisierung über einen Media Gateway Controller MGC, wobei die Media Gateway Controller MGC untereinander über ein BICC CS2 Protokoll oder ein ISUP+ Protokoll miteinander kommunizieren.

Die Schnittstelle zwischen dem Media Gateway Controller MGC und einem ihm zugeordneten Media Gateway MG erfolgt über ein Media Gateway Controll Protocoll MGCP oder über ein Protokoll nach dem H.248 Standard.

Als Schnittstelle zwischen dem PSTN Netz N2 bzw. dessen Trunk Lines und dem IP-Netz N1 fungieren die Media Gateways MG.

Bei Netzen, wie den herkömmlichen PSTN Netzen N2, die auf einem Time Devision Multiplexing (kurz: TDM) basieren, ist es bekannt, daß eine Verbindung zwischen zwei Teilnehmern vorübergehend unterbrochen wird, um sie zu einem späteren Zeitpunkt wieder auf zu nehmen. Ein solches Leistungsmerkmal 16 setzt voraus, daß beide Richtungen (Sende- und Empfangsrichtung) des Nutzkanals 12 der Verbindung unterbrochen werden können und daß diese Unterbrechung von dem Anrufsteuerungssystem verarbeitet werden kann.

Bei PSTN Netzen N2 wird eine solche Unterbrechung beider Richtungen bei einer lokalen Vermittlungsstelle 18 desjenigen Teilnehmers ausgeführt, der dieses Leistungsmerkmal 16 angefordert hat. Andere Netze, die nach anderen Protokollen arbeiten, wie beispielsweise ein Session Initiation Protocoll (kurz: SIP), unterstützen nur eine Unterbrechung der eigenen Senderichtung. Dies führt dazu, daß nach dem Verfahren aus dem Stand der Technik ein Zugriff auf solche Leistungsmerkmale 18 in einem SIP-basierten Netz nicht möglich war. Mit dem erfindungsgemäßen Verfahren wird dieses Problem jedoch gelöst.

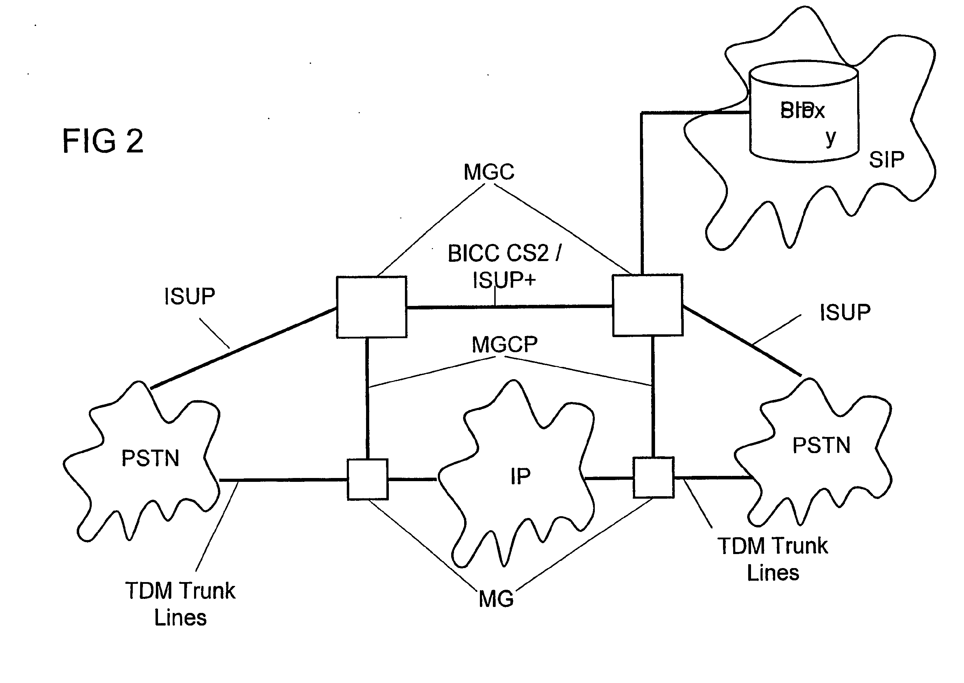

So ist in Figur 2 das grundsätzliche Zusammenspiel mit einem SIP-basierten Netz N1 gezeigt, die das eben beschriebene Szenario noch um ein SIP Interworking erweitert, so daß insgesamt ein Austausch zwischen den Protokollen SIP, ISUP und BICC stattfindet.

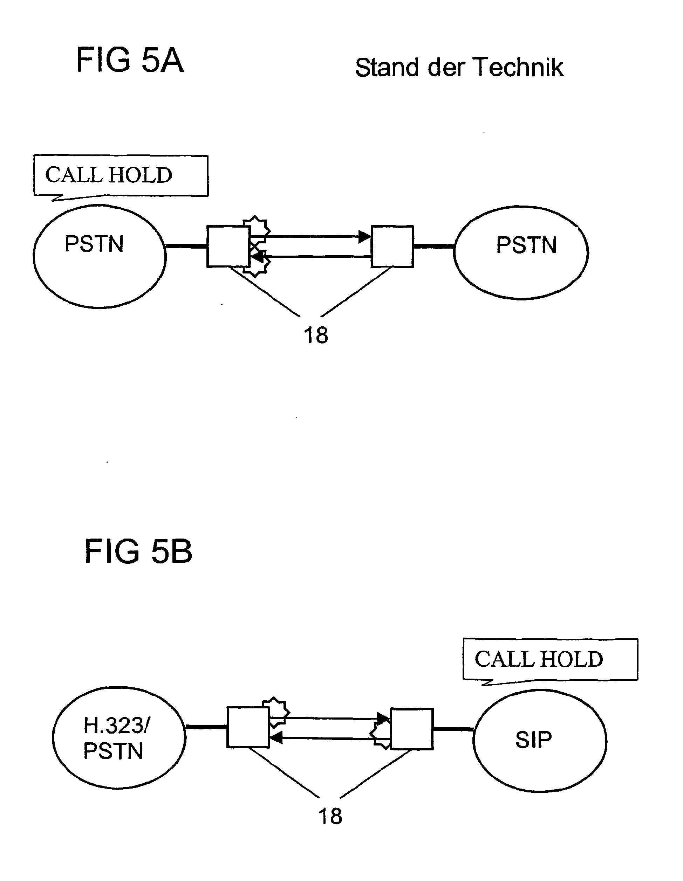

In Figur 5a ist schematisch dargestellt, wie bzw. wo eine Auftrennung der beteiligten Nutzkanäle 12 bei einem aus dem Stand der Technik bekannten ISDN Netz N2 erfolgt: nämlich vollständig (d.h. für beide Richtungen) bei der Vermittlungsstelle 18 des Teilnehmers, der das Leistungsmerkmal 16 initiiert bzw. angefordert hat. Dies setzt aber voraus, daß beide Teilnehmer dem PSTN Netz angehören.

Dieses Vorgehen ist nicht möglich, wenn ein erster Teilnehmer, ein SIP-Teilnehmer T1 mit einem anderen Teilnehmer in Verbindung treten und dieses Leistungsmerkmal 18 initiieren möchte, da das SIP Protokoll P1 nur eine lokale Unterbrechung des eigenen Sendekanals (d.h. also nur eine Richtung) erlaubt.

Auch für einen H.323-Teilnehmern ist in den entsprechenden Standards (ITU-T Standard H.450.4 Abschnitt 5.1) ein solches Merkmal im Interworking mit SIP bisher noch nicht berücksichtigt und deshalb nicht verfügbar. Eine lokale Unterbrechung, wie sie die erfindungsgemäßen Leistungsmerkmale 16 erfordern (damit insbesondere das Senden des Payloadstomes zum entfernten Partner unterdrückt werden kann), ist bisher für die H.323 Seite lediglich optional vorgesehen. SIP setzt allerdings ein unbedingtes Unterbrechen voraus.

Gemäß einer ersten Ausführungsform der Erfindung kommuniziert ein SIP Teilnehmer T1 mit einem PSTN Teilnehmer T2.

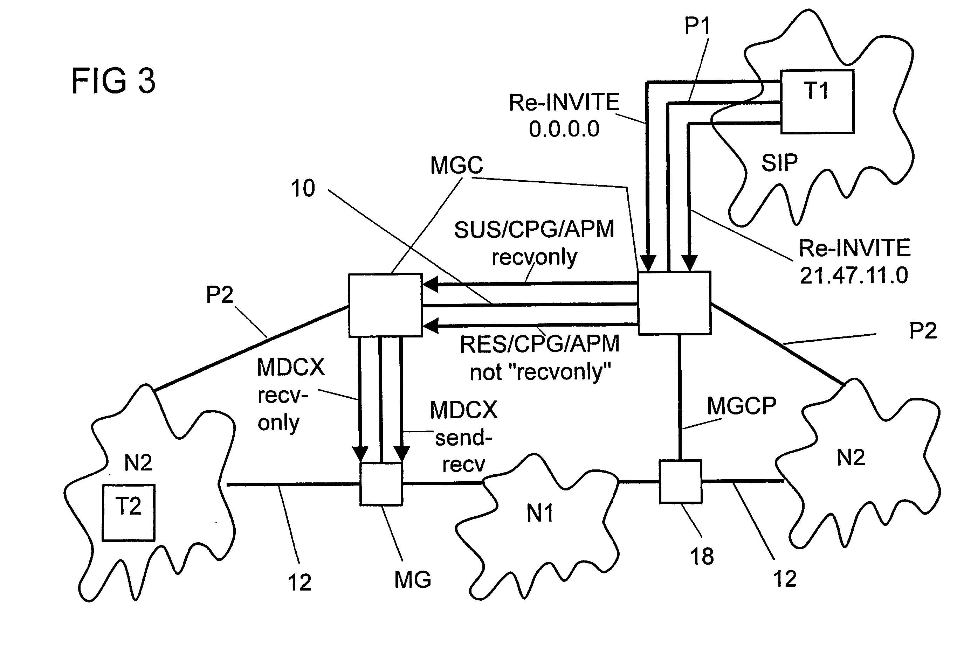

Unter Bezugnahme auf Figur 3 wird im folgenden die grundsätzliche, erfindungsgemäße Verbindungssteuerung im Falle eines Interworkings zwischen einem A-seitigen TDM Teilnehmer T2 und einem B-seitigen SIP Teilnehmer T1 ausgeführt, wobei das TDM Leistungsmerkmal 16 "Call Hold" oder "Terminal portability" von dem B-seitigen SIP Teilnehmer T1 genutzt werden soll. Im allgemeinen wird der anrufende Teilnehmer mit A und der angerufene Teilnehmer mit B bezeichnet. Hinsichtlich der Zuordnung der A und B-Seite besteht bei der Anwendung der Erfindung jedoch keine Einschränkung, so daß die erfindungsgemäße Vorrichtung bzw. das Verfahren für A- und B-seitige SIP-Anwender eingesetzt werden kann.

Hierzu sendet z.B. die SIP Applikation im B-seitigen Endgerät 14 entsprechend dem derzeitigen Stand der Technik eine re-INVITE zum entfernten Partnerteilnehmer T2 mit der IP Adresse auf 0.0.0.0 (oder die Steuerung des entfernten Endgerätes 14 erfolgt modifiziert, gemäß neuen Informationselementen bzw. Attributen oder Mode Parametern, siehe dazu auch IETF draft 2543bis -04 Kapitel B.4.4 oder Draft ietf-mmusic-sdp-offer-answer-02 Kapitel 8.4.). Am Interworking Punkt von BICC auf SIP, wird der Wert der IP Adresse 0.0.0.0 vorzugsweise in einen neuen Wert des Action Indicator im BAT APP (der Begriff "Action indicator" bezeichnet ein Informationselement im BICC, um bei MGC-MGC Kommunikation mit Hilfe von BICC einem entfernten Media Gateway Controller MGC durchzuführende Aktionen zu signalisieren; der Begriff "BAT" ist eine Abkürzung für das bearer application protocoll der ITU-T Q.765.5 und der Begriff "APP" ist eine Abkürzung für den application transport parameter der ITU-T Q.765) umgesetzt, welches dem entfernten Media Gateway Controller MGC sagt, daß für diese Verbindung vorübergehend kein Senden von Payload in Richtung des B-Teilnehmers T1 erlaubt ist. Dabei darf der APP in einer BICC SUS/RES (suspend/resume Befehl aus dem ISUP), oder CPG(Hold) / CPG(retrieve) (CPG: call progress aus dem ISUP) gesendet werden. Zusätzlich kann der APP in einer eigenständigen APM (APM: application transport message ITU-T Q.765) gesendet werden, wobei zu beachten ist, das dies gegebenenfalls zu einer Entsynchronisierung führen kann. Nach dessen Empfang veranlaßt das A-seitige Media Gateway Controller MGC mit Hilfe des Media Gateway Controll Protocolls MGCP das A-seitige Media Gateway MG z.B. mit Hilfe des Connection Mode Parameters "recvonly" (receive only), daß kein Mediastrom mehr zum B-seitigen SIP Teilnehmer T1 gesendet wird.

Wenn der B-seitige SIP Teilnehmer T1 nun den A-seitigen TDM Teilnehmer T2 wieder aufnehmen will, sendet die SIP Applikation wieder seine eigene IP Adresse (oder alternativ: die eingesetzten Informationselemente bzw. Attribute). Daraus wird im BICC wieder ein Action Indicator gemacht, welcher das Senden der Payload von A nach B zuläßt. Dabei darf der APP in einer BICC SUS/RES, oder CPG(Hold)/CPG(retrieve) oder zusätzlich in einer eigenständigen APM (s.o., sowie ggf. Verdoppelung der Meldungen in Hintereinanderschalten von Interworkings BICC-SIP usw.) gesendet werden. Daraufhin wird das Media Gateway MG mit dem Connection mode "sendrecv" wieder so eingestellt, daß der B-Teilnehmer T1 den A-Teilnehmer T2 wieder hört.

Für den Fall daß das Feature vom A-seitigen TDM Teilnehmer T2 initiiert werden soll, sind keine besonderen Aktionen erforderlich, da das Unterbrechen des Payloadstromes in der PSTN Vermittlungsstelle 18 durchgeführt wird.

Das aufgeführte Szenario ist nur ein Beispiel. Prinzipiell ist auch die andere Richtung (A-seitiger SIP Teilnehmer T1 sendet re-INVITE) erlaubt.

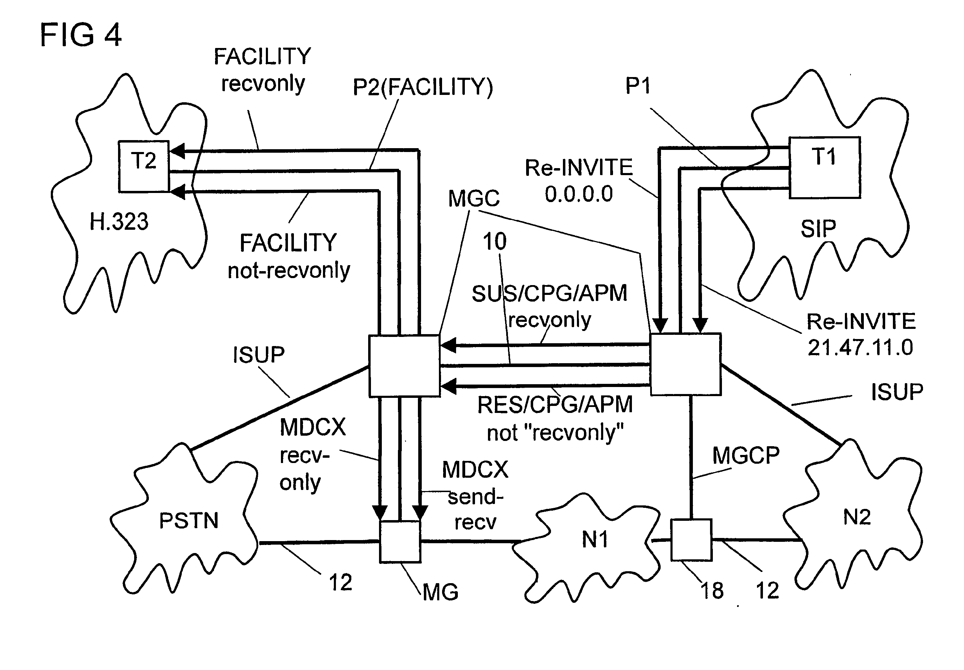

Gemäß einer zweiten Ausführungsform der Erfindung kommuniziert ein SIP Teilnehmer T1 mit einem H.323 Teilnehmer T2. Dieses Szenario ist in Figur 4 dargestellt.

Erfindungsgemäß wird der entfernte H.323 Teilnehmer entweder über das BICC nach einem modifizierten Verfahren gesteuert, oder der (abhängige) H.323 Teilnehmer unterbricht wirklich das Senden seiner Payload in Richtung des SIP Teilnehmers, wenn der die in H.450.4 definierten Informationselemente empfängt.

Dies wird erreicht, indem das um einen neuen Wert des Action Indikators erweiterte Protokoll (das erweiterte Protokoll bezieht sich auf die vorstehenden Erläuterungen hinsichtlich der ersten Ausführungsform der Erfindung, bei der hinsichtlich einer Kommunikation zwischen SIP und PSTN das mit dem SIP Protokoll interagierende Protokoll erweitert wurde, um auch dem SIP Teilnehmer die Leistungsmerkmale 16 "Call Hold / Terminal Portability" zur Verfügung zu stellen) gemäß der zweiten Ausführungsform der vorliegenden Erfindung auf neue H.225 Informationselemente gemappt wird.

Unter Bezugnahme auf Figur 4 wird im folgenden die grundsätzliche, erfindungsgemäße Verbindungssteuerung der zweiten Ausführungsform (Interworking H.323/SIP) im Falle eines Interworkings zwischen einem A-seitigen SIP Teilnehmer T1 und einem B-seitigen H.323 Teilnehmer T2 ausgeführt, wobei das TDM Leistungsmerkmal 16 "Call Hold" oder "Terminal portability" von dem B-seitigen SIP Teilnehmer T1 genutzt werden soll. Im allgemeinen wird der anrufende Teilnehmer mit A und der angerufene Teilnehmer mit B bezeichnet. Hinsichtlich der Zuordnung der A und B-Seite besteht bei der Anwendung der Erfindung jedoch keine Einschränkung, so daß die erfindungsgemäße Vorrichtung bzw. das Verfahren für A- und B-seitige SIP-Anwender eingesetzt werden kann.

Hierzu sendet z.B. die SIP Applikation im B-seitigen Endgerät 14 entsprechend dem derzeitigen Stand der Technik eine re-INVITE zum entfernten Partnerteilnehmer T2 mit der IP Adresse auf 0.0.0.0 (oder alternativ: die neuen Attribute). Am Interworking Punkt von BICC auf SIP, wird der Wert der IP Adresse 0.0.0.0 vorzugsweise in einen neuen Wert des Action Indicator im BAT APP (der Begriff "Action indicator" bezeichnet ein Informationselement im BICC, um bei MGC-MGC Kommunikation mit Hilfe von BICC einem entfernten Media Gateway Controller MGC durchzuführende Aktionen zu signalisieren; der Begriff "BAT" ist eine Abkürzung für das bearer application protocoll der ITU-T Q.765.5 und der Begriff "APP" ist eine Abkürzung für den application transport parameter der ITU-T Q.765) umgesetzt, welches dem entfernten Media Gateway Controller MGC sagt, daß für diese Verbindung vorübergehend kein Senden von Payload in Richtung des B-Teilnehmers T1 erlaubt ist. Dabei darf der APP in einer BICC SUS/RES (suspend/resume Befehl aus dem ISUP), oder CPG(Hold) / CPG(retrieve) (CPG: call progress aus dem ISUP) gesendet werden. Zusätzlich kann der APP in einer eigenständigen APM (APM: application transport message ITU-T Q.765) gesendet werden, wobei zu beachten ist, das dies gegebenenfalls zu einer Entsynchronisierung führen kann.

Nach dessen Empfang veranlaßt der A-seitige Media Gateway Controller MGC mit Hilfe des H.225 Protokolls mit einem neuen Informationselement, z.B. "recvonly" (receive only) in der CallHoldOperations (Abschnitt 12 der ITU-T Empfehlung H.450.4) in der FACILITY, daß kein Mediastrom mehr zum B-seitigen SIP Teilnehmer T1 gesendet wird.

Alternativ könnten die in H.450.4 schon definierten Informationselemente wiederverwendet werden, allerdings mit der zusätzlichen Forderung, dass H.323-Endgeräte die bisherige optionale Prozedur dann "mandatory" implementieren müssen.

Wenn der B-seitige SIP Teilnehmer T1 nun den A-seitigen H.323 Teilnehmer T2 wieder aufnehmen will, sendet die SIP Applikation wieder seine eigene IP Adresse (oder die Attribute, siehe oben). Daraus wird im BICC wieder ein Action Indicator gemacht, welcher das Senden der Payload von A nach B zuläßt. Dabei darf der APP in einer BICC SUS/RES, oder CPG(Hold)/CPG(retrieve) oder zusätzlich in einer eigenständigen APM (s.o., sowie ggf. Verdoppelung der Meldungen in Hintereinanderschalten von Interworkings BICC-SIP usw.) gesendet werden.

Daraufhin veranlaßt das A-seitige MGC mit Hilfe des H.225 Protokolls mit einem neuen Informationselement, beispielsweise "sendrecv" in der CallHoldOperations in der FACILITY, daß der Mediastrom wieder zum SIP Teilnehmer T1 gesendet wird.

Für den Fall daß das Feature vom A-seitigen H.323 Teilnehmer T2 initiiert werden soll, ist erforderlich, da der H.323 Teilnehmer T2 das Aussenden seines Payloadstroms definitiv unterbricht. Das Unterbrechen dieses Payloadstromes kann alternativ auch in einem zwischengeschalteten Media Gateway MG oder Media Gateway Controller MGC durchgeführt werden.

Das aufgeführte Szenario ist nur ein Beispiel. Prinzipiell ist auch die andere Richtung (A-seitiger SIP Teilnehmer T1 sendet re-INVITE) erlaubt.

Im allgemeinen wird, wie in Figur 5b dargestellt, ein Befehlssatz an den zweiten Teilnehmer, einen H.323 Teilnehmer T2 (bzw. in der ersten Ausführungsform einen PSTN Teilnehmer T2) ausgegeben, der die dortige Senderichtung des Nutzkanals 12 (bezüglich des zweiten Teilnehmers und in Richtung auf den ersten Teilnehmer T1) unterbricht, so daß der beteiligte Nutzkanal 12 insgesamt sowohl in Sende- als auch in Empfangsrichtung für die Dauer der Inanspruchnahme des Leistungsmerkmals 16 unterbrochen ist.

In der ersten Ausführungsform (SIP Teilnehmer und PSTN Teilnehmer) kommen für die Übermittlung und Bearbeitung der Signalisierung als Media Gateway Controller MGC - auch Feature Server oder Media Node genannt - vorzugsweise hiQ9200 zum Einsatz. Für die Übermittlung der Nutzkanäle zwischen unterschiedlichen Netztypen wie z.B. den bewährten leitungsorientierten Telephonnetzen (auch Time Devision Multiplexing (TDM) Netze genannt) oder paketorientierten Datennetzen (auch IP-Netze genannt, wenn das aus dem Internet bekannte Internet Protokol (IP) angewendet wird) werden als Media Gateways MG auch hiG1000 eingesetzt.

Diese Gateway Controller MGC können auch zwischen unterschiedlichen paketorientierten Datennetzen angeordnet sein, in denen z.B. die Protokolle der SIP Familie oder die der H.323 Familie zum Einsatz kommen.

Hierbei ist zwischen den Media Gateway Controllern MGC untereinander eine Kommunikation erforderlich, die jeweils nach den Regeln eines hierfür passenden Protokolls durchgeführt wird.

Für die MGC-MGC Kommunikation kann z.B. ein Protokoll gemäß dem ITU-T Standard Q.1902.x BICC CS2 (Bearer Independent Call Control - Capability Set 2) zum Einsatz kommen, in dem z.B. mit einem eigenen service indicator beim MTP (message transfer part) und Q765.5 BAT (bearer application transport) für IP Nutzkanäle (Bearer) RTP als Bearer Technologie beschrieben wird, wie bei der Trennung von Call und Bearer dem Endkunden seine gewohnten Leistungsmerkmale 16 bzw. Dienste im Telekommunikationsnetz bereitzustellen sind. Es können jedoch auch beliebige, gleich wirkende Protokolle wie z.B. ISUP+ vorgesehen werden.

Im Hinblick auf die erste Ausführungsform dieser Erfindung (Übergang: PSTN/IP-Netz) kann für die MGC-MG Kommunikation z.B. ein Protokoll entsprechend dem Standard MGCP (Media Gateway Control Protocol), dem ITU-T Standard H.248 oder ein beliebiges anderes, gleich wirkendes Protokoll zum Einsatz kommen.

Ziel des erfindungsgemäßen Interworkings zwischen den Protokollen:
- ISUP, BICC und SIP, gemäß der ersten Ausführungsform und
- H.323, BICC und SIP, gemäß der zweiten Ausführungsform ist u.a., dass sowohl den Teilnehmern T2 als auch den SIP Teilnehmern T1 die heutigen, aus den TDM Netzen bekannten ISDN Leistungsmerkmale 16 (auch Dienste, Features oder Services genannt) angeboten werden können bzw. sollen. Dabei soll auch einem SIP Teilnehmer T1 z.B. das bisher bekannte Verfahren "Call Hold/ 3PTY Service" ("3PTY Service" meint hier Three Party Service, bei dem ein Teilnehmer mit zwei weiteren Partnerteilnehmern im Sinne einer Konferenzschaltung sprechen kann), bei dem abhängige Partner auf Hold gelegt wird, bei Anwendung einer BICC MGC-MGC Kommunikation zur Verfügung gestellt werden. Dasselbe Verfahren kann z.B. auch bei dem Terminal Portability Service angewendet werden. Beiden Services ist gemeinsam, dass in ihrem Ablauf eine Auftrennung des Nutzkanals 12 erforderlich ist.

Problematisch ist hierbei, dass im Stand der Technik für diese Auftrennung im Verkehr zwischen zwei PSTN-, insbesondere TDM-Teilnehmern, eine automatische Bearbeitung des Leistungsmerkmals 16 stattfinden kann, was im Verkehr zwischen einem SIP-basierten Teilnehmer und einem PSTN-Teilnehmer nicht möglich ist.

Wie oben zum Stand der Technik und in Bezug zu Figur 5a erläutert, wird beim Verkehr zwischen PSTN Teilnehmern der Nutzkanal bzw. Bearer für beide Richtungen in der Vermittlungsstelle 18 desjenigen Teilnehmers aufgetrennt, von dem das Leistungsmerkmal 16 angefordert wird.

Beim Verkehr zwischen SIP Teilnehmern T1 ist vorgesehen, dass der SIP Teilnehmer T1 im Fall von Call Hold den Nutzkanal 12 zum Partnerteilnehmer T2 für die eigene Senderichtung zwar lokal unterbricht, aber für die eigene Empfangsrichtung (also die Senderichtung des entfernten Partners) nicht am eigenen Ort (d.h. lokal) auftrennt, sondern dem entfernten Teilnehmer mitteilt, die dortige Senderichtung zu unterbrechen (siehe dazu auch IETF draft 2543bis -04 Kapitel B.4.4 oder Draft ietf-mmusic-sdp-offer-answer-02 Kapitel 8.4.).

Somit konnte bisher bei einem Interworking zwischen einem PSTN Teilnehmer einerseits und einem SIP Teilnehmer T1 andererseits bisher nur der PSTN Teilnehmer das Leistungsmerkmal 16 anfordern, weil der vom SIP Teilnehmer T1 ausgehende Nutzkanal 12 in der Vermittlungsstelle 18 des PSTN Teilnehmers auf Hold gelegt wird. Im umgekehrten Fall (SIP Teilnehmer T1 fordert Call Hold an) wird jedoch der vom PSTN Teilnehmer ausgehende Nutzkanal 12 nicht auf Hold gelegt, da die bestehenden Vermittlungsstellen 18 des PSTN Netzes N2 die von dem SIP Teilnehmer T1 ausgesendete Mitteilung nicht erhalten und auch nicht verarbeiten können. Damit war das Leistungsmerkmal 16 nach dem Stand der Technik nicht ablauffähig, wenn es von einem SIP Teilnehmer T1 im Interworking mit einem PSTN Teilnehmer initiiert wurde.

Ebenso war das Leistungsmerkmal 16 nach dem Stand der Technik nicht ablauffähig, wenn es von einem SIP Teilnehmer T1 im Interworking mit einem H.323 Teilnehmer T2 initiiert wurde.

Anders ausgedrückt liegt die Erfindung in einem Verfahren zum Bereitstellen von zumindest einem (zusätzlichen) Leistungsmerkmal 16 bei einem ersten Endgerät, das zur Telekommunikation in einem digitalen Netz mit einem zweiten Endgerät ausgelegt ist,
- bei dem das erste Endgerät nach einem ersten Protokoll P1 und bei dem das zweite Endgerät nach einem zweiten Protokoll P2 realisiert ist und wobei die beiden Protokolle P1, P2 für ein Interworking ausgelegt sind und
- bei dem das Netz zumindest einen Signalisierungskanal 10 und zumindest einen Nutzkanal 12 umfaßt und bei dem die Steuerdaten getrennt von den Nutzkanaldaten übertragen werden und dessen Nutzkanalübertragung zumindest teilweise IP-basiert ist und
- bei dem das Leistungsmerkmal 16 eine Auftrennung des jeweiligen Nutzkanals 12 in Sende- und Empfangsrichtung erfordert, dadurch gekennzeichnet, daß
das erste Protokoll P1 für ein SIP-basiertes Netz ausgelegt ist und das zweite Protokoll P2 ein Protokoll nach dem H.323 Standard ist oder der zweite Teilnehmer ein ISDN Teilnehmer ist, indem die Steuerung des ersten Endgerätes insofern modifiziert wird, als daß das H.323-Endgerät (in der anderen Ausführungsform: das PSTN Endgerät) auf einen neu eingeführten Befehlssatz hin das Senden seiner Payload (lokal) unterbricht. Dies wird erreicht, indem eine nicht-lokale Auftrennung des jeweiligen Nutzkanals 12 in Empfangsrichtung hinsichtlich des ersten Teilnehmers T1 vorgesehen ist.

Der Begriff "lokale Auftrennung" meint hier eine Auftrennung des beteiligten Nutzkanals 12 in einer lokaler Vermittlungsstelle 18 in Bezug auf den jeweiligen Teilnehmer.
Mit dem hier vorgeschlagenen Verfahren können also die Leistungsmerkmale Call Hold und Terminal Portability bei einem SIP Teilnehmer T1 bereitgestellt werden sowohl in einem Interworking zu einem PSTN Teilnehmer bzw. dem ISUP Protokoll als auch zu einem H.323 Teilnehmer.

Das Verfahren ist vorteilhafterweise sowohl für Fälle einsetzbar, bei denen das Leistungsmerkmal 16 von dem ersten Teilnehmer T1 aus initiiert wird, als auch für Fälle, bei denen das Leistungsmerkmal 16 von dem zweiten Teilnehmer T2 initiiert wird.

Die zusätzlich zur Verfügung gestellten Leistungsmerkmale 16 betreffen in der bevorzugten Ausführungsform solche, die in Netzen, die nach dem Time-Division-Multiplexing (TDM) organisiert sind, ohnehin zur Verfügung stehen, vorzugsweise "Call Hold" oder "Terminal Portability".

Vorteilhafterweise wird es mit der vorgeschlagenen Lösung ermöglicht, daß der abhängige (H.323 oder PSTN) Teilnehmer T2 wirklich das Senden seiner Payload in Richtung SIP Teilnehmer T1 unterbricht.

Die erfindungsgemäße Unterbrechung findet entweder im Endgerät 14 des H.323 Teilnehmers T2 selbst statt oder bei einem Übergang zwischen PSTN/IP-Netz über einen Media Gateway MG in Verbindung mit einem Media Gateway Controller MGC, der dem Endgerät 14 zugeordnet ist und zwischen dem Endgerät 14 und dem SIP-Teilnehmer (bzw. Endgerät) angeordnet ist. Dies hat den Vorteil, daß das Endgerät 14 unverändert bleiben kann.

Entgegen der Anwendung in der bestehenden Vermittlungstechnik mit der derzeit ohnehin schon vorhandenen Möglichkeit, den entfernten Teilnehmer lokal für Sende- und Empfangsrichtung auf Hold zu legen, kann dies erfindungsgemäß auch im Falle eines H.323/ISUP-BICC-SIP-Interworkings im Media Gateway MG zumindest für die Senderichtung des H.323 Teilnehmers durchgeführt werden.

Vorteilhaft wird hierdurch dem SIP Draft Standard nicht widersprochen.

Weiterhin wird ein Verfahren angeboten, welches dem Operator ermöglicht, diese Feature auch in einem H.323-ISUP-SIP Netz mit einem Interworking zu BICC oder mit einem funktional gleichwertigen Interworking ohne Einschränkung anzubieten.

Auch ist keine Adaption des bestehenden Infrastruktur, insbesondere der Vermittlungsstellen 18 des Netzes N1 bzw. N2, erforderlich.

Es sei betont, daß anstelle von SIP auch jedes andere, gleich wirkende Protokoll wie bspw. SIP-T (SIP-T ist ein Protokoll, das auf SIP basiert, um das Interworking von PSTN und SIP zu vereinfachen) und anstelle von BICC auch alternative Protokolle, wie z.B. ISUP+ angewendet werden können.

Zur Steuerung des entfernten MGC wird das ITU-T Protokoll Q.765.5 z. B. vorzugsweise um folgenden Wert des Action Indicators erweitert:
- 1110 0000: recvonly;
- 1110 0001: sendrecv;
- recvonly:: indication that IP packets are only allowed to be received
- sendrecv:: indication that IP packets are allowed to be received and send

Zur Steuerung des entfernten H.323 Teilnehmers T2 wird das so erweiterte Protokoll Q.765.5 (siehe oben) weiterhin entsprechend der nachfolgenden Vorschrift auf neue, erfindungsgemäße H.225 (ITU-T Recommendation, H.323 Call Signaling) Informationselemente gemappt. Dieses Mapping hat in diesem Fall Vorrang vor der Mappingvorschrift, die in der H.245 Annex C (Interworking ISUP auf H.323) Abschnitt C.6.2.8 Call Hold beschrieben ist.

| **Mapping von SIP (via BICC) auf H.323** | | **Mapping von SIP (via (Alternative) (optionale mandatory)** | |
|---|---|---|---|
| BICC | H.323(H223) | BICC | H.323(H.225) |
| CPG/SUS/RES | FACILITY | CPG/SUS/RES | FACILITY |
| APP | | APP | |
| Action indicator | CallHoldOperation (neu) | Action indicator | CallHoldOperation (alt) |
| 1110 0000 | | 11100000 | HoldNotific |
| recvonly | recvonly | recvonly | |
| 1110 0001 | | 11100001 | HoldRetrieve |
| sendrecv | sendrecv | sendrecv | |

mit:
- recvonly:: indication that IP packets are only allowed to be received
- sendrecv:: indication that IP packets are allowed to be received and send

In den beiden bevorzugten Ausführungsformen der Erfindung bezieht diese sich auf ein Interworking der Protokolle H.323/ISUP/BICC/SIP. Es sind jedoch auch Netzwerkkonfigurationen abgedeckt, die ein unmittelbares Interworking zwischen ISUP bzw. H.323 und SIP vorsehen, ohne BICC-Schnittstelle, beispielsweise über eine interne Anwendung des vorstehend beschriebenen Verhaltens innerhalb der Vermittlungsstelle oder dem Media Gateway Controller MGC.

Aufgrund der Vielzahl der unterschiedlichen Netzzugangsprotokolle ist es sinnvoll, das jeweilige Signalisierungssystem des Teilnehmers in ein standardisiertes Signalisierungssystem, z.B. V5 zu konvertieren, um ein einheitliches System hinsichtlich der Vermittlung zu schaffen.

Deshalb kann in alternativen Ausführungsformen der Erfindung anstelle des Media Gateways MG (wie im Beispiel) auch ein IAD (integrated access device),ein MTA (multimedia terminal adaptor) und/oder eine interaktive Sprachausgabe (IVR, VoDSL, VoCable) von einem Media Gateway Controller MGC beim Empfang des neuen Action Indicators angewiesen werden, die Senderichtung zu unterdrücken.

Es sei betont, dass die Beschreibung der für die Erfindung relevanten Komponenten des Netzes grundsätzlich nicht einschränkend zu verstehen ist. Für einen einschlägigen Fachmann ist insbesondere offensichtlich, dass die verwendeten Begriffe funktional und nicht physikalisch zu verstehen sind. Somit können die Komponenten auch teilweise oder vollständig in Software und/oder über mehrere physikalische Einrichtungen verteilt realisiert werden. Auch kommen in dem Fall, dass beide Teilnehmer (SIP und H.323) an einem CFS angeschlossen sind, die oben beschriebenen Abläufe und das dazu gehörige Mapping intern in dem CFS zum Ablauf.

## Patentansprüche

1. Verfahren zum Interworking zwischen mehreren Protokollen, vorzugsweise einem ersten Protokoll (P1), nachdem ein erster Teilnehmer (T1) arbeitet und einem zweiten Protokoll (P2), nachdem ein zweiter Teilnehmer (T2) arbeitet eines digitalen, multimedialen Kommunikationsnetzes, bei dem
- eine Verbindung zwischen zwei oder mehr Teilnehmern zumindest einen Nutzkanal (12) in Sende- und Empfangsrichtung umfaßt,
- bei dem das erste Protokoll (P1) zur Signalisierung in paketorientierten oder IP-basierten Netzen (N1) ausgelegt ist und für Leistungsmerkmale (16), die eine Auftrennung des Nutzkanals (12) erfordern, nur eine lokale Auftrennung des jeweiligen Nutzkanals (12) in Senderichtung vorsieht und
- bei dem das zweite Protokoll (P2) für Leistungsmerkmale (16), die eine Auftrennung des Nutzkanals (12) erfordern, zumindest optional eine lokale Auftrennung des jeweiligen Nutzkanals (12) in Senderichtung vorsieht
**dadurch gekennzeichnet, daß**
auch dem ersten Teilnehmer (T1) eine Menge von Leistungsmerkmalen (16) zur Verfügung gestellt wird, vorzugsweise solche Leistungsmerkmale (16), die eine Auftrennung des jeweiligen Nutzkanals (12) in Sende- und Empfangsrichtung erfordern, indem der zweite Teilnehmer (T2) insofern modifiziert gesteuert wird, als daß das Senden in Richtung des ersten Teilnehmers (T1), vorzugsweise das Senden eines Mediastromes über den jeweiligen Nutzkanal (12), unterbrochen wird.

2. Verfahren nach Anspruch 1,
**dadurch gekennzeichnet, daß**
das Verfahren zum Interworking zwischen zwei Protokollen (P1, P2) in einem Netz mit folgenden Eigenschaften ausgelegt ist:
- ein erster Teilnehmer (T1) ist entsprechend dem ersten Protokoll (P1) und ein zweiter Teilnehmer (T2) entsprechend dem zweiten Protokoll (P2) realisiert,
- eine Verbindung zwischen den beiden Teilnehmern (T1, T2) wird durch zumindest je einen Nutzkanal (12) in Sende- und Empfangsrichtung realisiert,
- im Netz ist zumindest ein Protokollkonverter (MG, MGC) vorgesehen, der zwischen den beiden Protokollen (P1, P2) angeordnet ist,
- für Leistungsmerkmale (16), die in ihrem Ablauf eine Auftrennung der Nutzkanäle (12) vorsehen, ist bei Initiieren des Leistungsmerkmals (16) durch den ersten Teilnehmer (T1) eine Mitteilung in Richtung des zweiten Teilnehmers (T2) vorgesehen mit dem Ziel, den von dem zweiten Teilnehmer (T2) ausgehenden Nutzkanal (12) zu unterbrechen,
mit folgenden Schritten:
(1) dem Protokollkonverter (MG, MGC) wird mitgeteilt, dass die Mitteilung von dem ersten Teilnehmer (T1) aus gesendet wurde,
(2) der von dem zweiten Teilnehmer (T2) ausgehende Nutzkanal (12) wird durch den Protokollkonverter (MG, MGC) unterbrochen.

3. Verfahren nach zumindest einem der Ansprüche 1 oder 2, **dadurch gekennzeichnet, daß**
- falls der zweite Teilnehmer (T2) ein PSTN-Teilnehmer ist - im Netz zumindest ein Media Gateway (MG) vorgesehen ist, das zwischen den beiden Protokollen (P1, P2) angeordnet ist und über das bei Initiieren des Leistungsmerkmals (16) durch den ersten Teilnehmer (T1) ein Befehlssatz in Richtung des zweiten Teilnehmers (T2) ausgegeben wird, den von dem zweiten Teilnehmer (T2) ausgehenden Nutzkanal (12) zu unterbrechen, bei dem der Befehlssatz zumindest folgende Ereignisse auslöst:
(3) das Media Gateway (MG)erhält zumindest eine Mitteilung über den Absender des Befehls;
(4) das Media Gateway (MG) führt mittelbar oder unmittelbar die Unterbrechung des von dem zweiten Teilnehmer (T2) ausgehenden Nutzkanals (12) durch.

4. Verfahren nach Anspruch 3,
**dadurch gekennzeichnet, daß**
im Netz zumindest ein Media Gateway Controller (MGC) vorgesehen ist, der dem jeweiligen Media Gateway (MG) zugeordnet ist und daß der Befehlssatz zur nicht-lokalen Unterbrechung des Nutzkanals (12) mittelbar erfolgt und vorzugsweise über den Media Gateway Controller (MGC) verarbeitet wird.

5. Verfahren nach Anspruch 4,
**dadurch gekennzeichnet, daß**
das Verfahren ein Media Gateway Controll Protokoll (MGCP) oder ein H.248 Protokoll verwendet, das als Schnittstelle zwischen Signalisierungs- und Nutzdatenkanal und damit zwischen Media Gateway (MG)und Media Gateway Controller (MGC) fungiert.

6. Verfahren nach mindestens einem der vorstehenden Ansprüche 4 bis 5,
**dadurch gekennzeichnet, daß**
die Kommunikation zwischen dem ersten Protokoll (P1) und dem zweiten Protokoll (P2) im Interworking zu einem dritten Protokoll (P3) erfolgt, das als Schnittstelle für die MGC-MGC-Kommunikation dient, vorzugsweise über das BICC CS2 Protokoll oder das ISUP+ Protokoll.

7. Verfahren nach mindestens einem der vorstehenden Ansprüche,
**dadurch gekennzeichnet, daß**
das Leistungsmerkmal (16) "Call Hold" oder "Terminal Portability", ist.

8. Verfahren nach mindestens einem der vorstehenden Ansprüche,
**dadurch gekennzeichnet, daß**
die Verbindung zwischen den Teilnehmern (T1, T2) zusätzlich einen vom Nutzkanal bzw. den Nutzkanälen (12) getrennten Signalisierungskanal umfaßt, der zumindest teilweise IP-basiert ist.

9. Verfahren nach mindestens einem der vorstehenden Ansprüche,
**dadurch gekennzeichnet, daß**
- falls der zweite Teilnehmer (T2) ein analoger Teilnehmer ist oder ein ISDN-Teilnehmer (nach dem Q.931 Standard), - anstelle des oder zusätzlich zu dem Media Gateway (MG) ein Integrated Access Device (IAD)und/oder ein Multimedia Terminal Adaptor (MTA) und/oder eine interaktive Sprachausgabe (Interactive Voice Response, IVR) vorgesehen ist, um den gesamten Datenverkehr des Teilnehmers zusammenzufassen und zur nächsten Vermittlungsstelle zu senden.

10. Verfahren nach mindestens einem der vorstehenden Ansprüche,
**dadurch gekennzeichnet, daß**
das Verfahren zusätzlich folgenden Schritt umfäßt:
der Teilnehmer, der das Leistungsmerkmal (12) nicht initiiert hat und letzteres lediglich passiv in Anspruch nimmt, erhält eine Mitteilung auf seinem Endgerät (14) hinsichtlich der Ausführung des Leistungsmerkmals (12) und/oder einer Unterbrechung eines Media- und/oder Payloadstromes.

11. Verfahren nach mindestens einem der vorstehenden Ansprüche,
**dadurch gekennzeichnet, daß**
indem das zweite Protokoll (P2) um einen Befehlssatz erweitert wird, der es ermöglicht, daß der jeweilige Nutzkanal (12) auch in Empfangsrichtung hinsichtlich des ersten Teilnehmers (T1) nicht-lokal unterbrochen wird.

12. Verfahren nach mindesten einem der vorstehenden Ansprüche,
**dadurch gekennzeichnet, daß**
die Unterbrechung in einem Endgerät (14) des H.323-Teilnehmers (T2) oder - falls es sich bei dem zweiten Teilnehmer (T2) um einen PSTN-Teilnehmer handelt - in dem ihm zugeordneten Media Gateway Controller (MGC) und dem ihm zugeordneten Media Gateway (MG) erfolgt.

13. Verfahren nach mindestens einem der vorstehenden Ansprüche 2 bis 12,
**dadurch gekennzeichnet, daß**
die Mitteilung von einem dem zweiten Teilnehmer (T2) zugeordneten Protokollkonverter (MG, MGC) empfangen wird und daraufhin dem zweiten Teilnehmer (T2) ein Befehl (FACILITY) zugestellt wird, den von dem zweiten Teilnehmer (T2) ausgehenden Nutzkanal (12) zu unterbrechen, falls der zweite Teilnehmer (T2) ein H.323-Teilnehmer ist.

14. Protokollkonverter zur Durchführung eines der vorstehenden Verfahren, vorzugsweise zur Durchführung eines Interworkings von einem ersten Protokoll (P1) eines ersten Teilnehmers (T1) mit einem zweiten Protokoll (P2) eines zweiten Teilnehmers (T2) eines digitalen, multimedialen Kommunikationsnetzes, mit:
- zumindest einem Nutzkanal (12) zwischen den beiden Teilnehmern (T1, T2) in Sende- und Empfangsrichtung,
- bei dem das erste Protokoll (P1) zur Signalisierung in paketorientierten oder IP-basierten Netzen (N1) ausgelegt ist und für Leistungsmerkmale (16), die eine Auftrennung des Nutzkanals (12) erfordern, nur eine lokale Auftrennung des jeweiligen Nutzkanals (12) in Senderichtung vorsieht und
- bei dem das zweite Protokoll (P2) für Leistungsmerkmale (16), die eine Auftrennung des Nutzkanals (12) erfordern, zumindest optional eine lokale Auftrennung des jeweiligen Nutzkanals (12) in Senderichtung vorsieht
**dadurch gekennzeichnet, daß**
der Protokollkonverter Mittel umfaßt, die auch dem ersten Teilnehmer (T1) eine Menge von Leistungsmerkmalen zur Verfügung stellen, vorzugsweise solche Leistungsmerkmale (16), die eine Auftrennung des jeweiligen Nutzkanals (12) in Sende- und Empfangsrichtung erfordern, indem der zweite Teilnehmer (T2) insofern modifiziert gesteuert wird, als daß das Senden in Richtung des ersten Teilnehmers (T1), vorzugsweise das Senden eines Mediastromes über den jeweiligen Nutzkanal (12), unterbrochen wird.

15. Protokollkonverter nach Anspruch 14,
**dadurch gekennzeichnet, daß**
der Protokollkonverter ein Media Gateway (MG) und/oder einen Media Gateway Controller (MGC) umfaßt, falls im Netz ein PSTN/IP-Übergang erfolgt, wobei die Kommunikation zwischen den Media Gateway Controllern (MGC) über ein drittes Protokoll (P3), vorzugsweise BICC, erfolgt.

16. Protokollkonverter nach zumindest einem der Ansprüche 14 bis 15,
**dadurch gekennzeichnet, daß**
das erste Protokoll (P1) SIP und daß das zweite Protokoll (P2) ein Protokoll nach dem H.323-Standard oder daß der zweite Teilnehmer (T2) ein analoger Teilnehmer oder ein ISDN-Teilnehmer ist.

17. Protokollkonverter nach zumindest einem der Ansprüche 14 bis 16,
**dadurch gekennzeichnet, daß**
der Protokollkonverter um eine Erweiterungseinheit ergänzt wird, die das zweite Protokoll (P2) um einen Befehlssatz zur nicht-lokalen Auftrennung des jeweiligen Nutzkanals (12) in Empfangsrichtung hinsichtlich des ersten Teilnehmers (T1) erweitert.

18. Multimediales Kommunikationsnetzwerksystem, vorzugsweise umfassend:
- ein erstes Netz (N1), das paketorientiert oder IP-basiert ist und dem ein erster Teilnehmer (T1) angeschlossen ist, der auf ein erstes Protokoll (P1) zugreift, das zur Signalisierung in paketorientierten oder IP-basierten Netzen (N1) ausgelegt ist und für Leistungsmerkmale (16), die eine Auftrennung des Nutzkanals (12) erfordern, nur eine lokale Auftrennung des jeweiligen Nutzkanals (12) in Senderichtung vorsieht und
- ein zweites Netz (N2), dem ein zweiter Teilnehmer (T2) angeschlossen ist, der auf ein zweites Protokoll (P2) zugreift, das für Leistungsmerkmale (16), die eine Auftrennung des Nutzkanals (12) erfordern, zumindest optional eine lokale Auftrennung des jeweiligen Nutzkanals (12) in Senderichtung vorsieht,
**dadurch gekennzeichnet, daß**
das Netzwerksystem dem ersten Teilnehmer (T1) eine Menge von Leistungsmerkmalen (16) zur Verfügung stellt, vorzugsweise solche Leistungsmerkmale (16), die eine Auftrennung des jeweiligen Nutzkanals (12) in Sende- und Empfangsrichtung erfordern, indem der zweite Teilnehmer (T2) insofern modifiziert gesteuert wird, als daß das Senden in Richtung des ersten Teilnehmers (T1), vorzugsweise das Senden eines Mediastromes über den jeweiligen Nutzkanal (12), unterbrochen wird.

## Claims

1. Method for interworking between a plurality of protocols, preferably a first protocol (P1), on the basis of which a first subscriber (T1) works, and a second protocol (P2), on the basis of which a second subscriber (T2) works, in a digital multimedia communication network, in which
- a connection between two or more subscribers comprises at least one useful channel (12) in the transmission and reception directions,
- in which the first protocol (P1) is designed for signalling in packet-oriented or IP-based networks (N1) and, for service features (16) which require the useful channel (12) to be split, only provides a local split for the respective useful channel (12) in the transmission direction, and
- in which the second protocol (P2), for service features (16) which require the useful channel (12) to be split, at least optionally provides a local split for the respective useful channel (12) in the transmission direction, **characterized in that**
the first subscriber (T1) is also provided with a set of service features (16), preferably such service features (16) as require the respective useful channel (12) to be split in the transmission and reception directions, by virtue of the second subscriber (T2) being controlled in a form modified to the extent that the transmission in the direction of the first subscriber (T1), preferably the transmission of a media stream via the respective useful channel (12), is interrupted.

2. Method according to Claim 1,
**characterized in that**
the method for interworking between two protocols (P1, P2) in a network is designed to have the following properties:
- a first subscriber (T1) is implemented in accordance with the first protocol (P1) and a second subscriber (T2) is implemented in accordance with the second protocol (P2),
- a connection between the two subscribers (T1, T2) is implemented by at least one respective useful channel (12) in the transmission and reception directions,
- the network contains at least one protocol converter (MG, MGC) which is arranged between the two protocols (P1, P2),
- for service features (16) which have a course that provides for the useful channels (12) to be split, initiation of the service feature (16) by the first subscriber (T1) involves the provision of a notification in the direction of the second subscriber (T2) with the aim of interrupting the useful channel (12) that emanates from the second subscriber (T2),
having the following steps:
(1) the protocol converter (MG, MGC) is notified that the notification has been sent from the first subscriber (T1),
(2) the useful channel (12) emanating from the second subscriber (T2) is interrupted by the protocol converter (MG, MGC).

3. Method according to at least either of Claims 1 and 2, **characterized in that**
- if the second subscriber (T2) is a PSTN subscriber - the network contains at least one media gateway (MG) which is arranged between the two protocols (P1, P2) and which, when the service feature (16) is initiated by the first subscriber (T1), is used to output a command set in the direction of the second subscriber (T2) to interrupt the useful channel (12) emanating from the second subscriber (T2), in which the command set triggers at least the following events:
(3) the media gateway (MG) receives at least one notification about the sender of the command;
(4) the media gateway (MG) interrupts the useful channel (12) emanating from the second subscriber (T2) indirectly or directly.

4. Method according to Claim 3,
**characterized in that**
the network contains at least one media gateway controller (MGC) which is associated with the respective media gateway (MG), and **in that** the command set for the nonlocal interruption of the useful channel (12) is effected indirectly and is preferably processed using the media gateway controller (MGC).

5. Method according to Claim 4,
**characterized in that**
the method uses a media gateway control protocol (MGCP) or an H.248 protocol which acts as an interface between the signalling channel and the useful data channel and hence between the media gateway (MG) and the media gateway controller (MGC).

6. Method according to at least either of the preceding Claims 4 and 5,
**characterized in that**
the communication between the first protocol (P1) and the second protocol (P2) is effected in the interworking for a third protocol (P3) which serves as an interface for the MGC-MGC communication, preferably using the BICC CS2 protocol or the ISUP+ protocol.

7. Method according to at least one of the preceding claims,
**characterized in that**
the service feature (16) is "call hold" or "terminal portability".

8. Method according to at least one of the preceding claims,
**characterized in that**
the connection between the subscribers (T1, T2) additionally comprises a signalling channel that is separate from the useful channel or the useful channels (12) and that is at least partly IP-based.

9. Method according to at least one of the preceding claims,
**characterized in that**
- if the second subscriber (T2) is an analogue subscriber or an ISDN subscriber (based on the Q.931 standard) - instead of or in addition to the media gateway (MG) an integrated access device (IAD) and/or a multimedia terminal adapter (MTA) and/or an interactive voice output (interactive voice response, IVR) is/are provided in order to combine all the data traffic of the subscriber and to transmit it to the next switching centre.

10. Method according to at least one of the preceding claims,
**characterized in that**
the method additionally comprises the following step:
the subscriber which has not initiated the service feature (12) and makes only passive use of the latter receives a notification on his terminal (14) regarding the execution of the service feature (12) and/or an interruption in a media and/or payload stream.

11. Method according to at least one of the preceding claims,
**characterized in that**
the second protocol (P2) is expanded by a command set which allows the respective useful channel (12) also to be interrupted in the reception direction for the first subscriber (T1) nonlocally.

12. Method according to at least one of the preceding claims,
**characterized in that**
the interruption is effected in a terminal (14) of the H.323 subscriber (T2) or - if the second subscriber (T2) is a PSTN subscriber - in the media gateway controller (MGC) associated with said subscriber and the media gateway (MG) associated with said media gateway controller.

13. Method according to at least one of the preceding Claims 2 to 12,
**characterized in that**
the notification is received by a protocol converter (MG, MGC) associated with the second subscriber (T2) and then the second subscriber (T2) is issued a command (FACILITY) to interrupt the useful channel (12) emanating from the second subscriber (T2) if the second subscriber (T2) is an H.323 subscriber.

14. Protocol converter for carrying out one of the preceding methods, preferably for carrying out interworking for a first protocol (P1) of a first subscriber (T1) with a second protocol (P2) of a second subscriber (T2) in a digital, multimedia communication network, having:
- at least one useful channel (12) between the two subscribers (T1, T2) in the transmission and reception directions,
- in which the first protocol (P1) is designed for signalling in packet-oriented or IP-based networks (N1) and, for service features (16) which require the useful channel (12) to be split, only provides a local split for the respective useful channel (12) in the transmission direction, and
- in which the second protocol (P2), for service features (16) which require the useful channel (12) to be split, at least optionally provides a local split for the respective useful channel (12) in the transmission direction,
**characterized in that**
the protocol converter comprises means which also provide the first subscriber (T1) with a set of service features, preferably such service features (16) as require the respective useful channel (12) to be split in the transmission and reception directions, by virtue of the second subscriber (T2) being controlled in a form modified to the extent that the transmission in the direction of the first subscriber (T1), preferably the transmission of a media stream via the respective useful channel (12), is interrupted.

15. Protocol converter according to Claim 14,
**characterized in that**
the protocol converter comprises a media gateway (MG) and/or a media gateway controller (MGC) if a PSTN/IP transition takes place in the network, wherein the communication between the media gateway controllers (MGC) is effected using a third protocol (P3), preferably BICC.

16. Protocol converter according to at least either of Claims 14 and 15,
**characterized in that**
the first protocol (P1) is SIP and **in that** the second protocol (P2) is a protocol based on the H.323 standard or **in that** the second subscriber (T2) is an analogue subscriber or an ISDN subscriber.

17. Protocol converter according to at least one of Claims 14 to 16,
**characterized in that**
the protocol converter is augmented by an expansion unit which expands the second protocol (P2) by a command set for the nonlocal splitting of the respective useful channel (12) in the reception direction for the first subscriber (T1).

18. Multimedia communication network system, preferably comprising:
- a first network (N1) which is packet-oriented or IP-based and to which a first subscriber (T1) is connected which accesses a first protocol (P1) which is designed for signalling in packet-oriented or IP-based networks (N1) and, for service features (16) which require the useful channel (12) to be split, only provides a local split for the respective useful channel (12) in the transmission direction, and
- a second network (N2) to which a second subscriber (T2) is connected which accesses a second protocol (P2) which, for service features (16) which require the useful channel (12) to be split, at least optionally provides a local split for the respective useful channel (12) in the transmission direction,
**characterized in that**
the network system provides the first subscriber (T1) with a set of service features (16), preferably such service features (16) as require the respective useful channel (12) to be split in the transmission and reception directions, by virtue of the second subscriber (T2) being controlled in a form modified to the extent that the transmission in the direction of the first subscriber (T1), preferably the transmission of a media stream via the respective useful channel (12), is interrupted.

## Revendications

1. Procédé d'interopérabilité de plusieurs protocoles d'un réseau de communication multimédia numérique, de préférence un premier protocole (P1) selon lequel un premier abonné (T1) opère et un deuxième protocole (P2) selon lequel un deuxième abonné (T2) opère, selon lequel:
- une liaison entre deux ou plusieurs abonnés comprend au moins un canal utile (12) en sens d'émission et de réception ;
- le premier protocole (P1) est conçu pour la signalisation dans des réseaux (N1) orientés paquets ou basés sur IP et prévoit, pour des caractéristiques de services (16) qui nécessitent une séparation du canal utile (12), uniquement une séparation locale du canal utile respectif (12) dans le sens de l'émission ; et
- le deuxième protocole (P2) prévoit, pour des caractéristiques de services (16) qui nécessitent une séparation du canal utile (12), au moins optionnellement une séparation locale du canal utile respectif (12) dans le sens de l'émission ;
**caractérisé en ce qu'**est mis à la disposition du premier abonné (T1) également, un ensemble de caractéristiques de services (16), et de préférence de caractéristiques de services (16) qui nécessitent une séparation du canal utile respectif (12) en sens d'émission et de réception, par le fait que le deuxième abonné (T2) est commandé de manière modifiée dans la mesure où l'émission en direction du premier abonné (T1), et de préférence l'émission d'un flux média sur le canal utile respectif (12), est interrompue.

2. Procédé selon la revendication 1, **caractérisé en ce que** le procédé d'interopérabilité de deux protocoles (P1, P2) dans un réseau est conçu avec les caractéristiques suivantes :
- un premier abonné (T1) est réalisé selon le premier protocole (P1) et un deuxième abonné (T2) est réalisé selon le deuxième protocole (P2) ;
- une liaison entre les deux abonnés (T1, T2) est réalisée par au moins respectivement un canal utile (12) en sens d'émission et de réception ;
- dans le réseau est prévu au moins un convertisseur de protocole (MG, MGC) qui est situé entre les deux protocoles (P1, P2) ;
- pour des caractéristiques de services (16) dont le déroulement prévoit une séparation des canaux utiles (12) est prévue, lors de l'initialisation de la caractéristique de service (16) par le premier abonné (T1), une communication en direction du deuxième abonné (T2) dans le but d'interrompre le canal utile (12) qui part du deuxième abonné (T2),
comportant les étapes suivantes :
(1) le convertisseur de protocole (MG, MGC) est informé que la communication a été émise à partir du premier abonné (T1) ;
(2) le canal utile (12) qui part du deuxième abonné (T2) est interrompu par le convertisseur de protocole (MG, MGC).

3. Procédé selon au moins l'une des revendications 1 ou 2, **caractérisé en ce que**, si le deuxième abonné (T2) est un abonné PSTN, au moins une passerelle média (MG) est prévue dans le réseau, laquelle est située entre les deux protocoles (P1, P2) et via laquelle est émis en direction du deuxième abonné (T2), lors de l'initialisation de la caractéristique de service (16) par le premier abonné (T1), un ensemble d'ordres ordonnant d'interrompre le canal utile (12) qui part du deuxième abonné (T2), selon lequel l'ensemble d'ordres déclenche au moins les événements suivants :
(3) la passerelle média (MG) reçoit au moins une communication relative à l'expéditeur de l'ordre ;
(4) la passerelle média (MG) exécute directement ou indirectement l'interruption du canal utile (12) qui part du deuxième abonné (T2).

4. Procédé selon la revendication 3, **caractérisé en ce qu'**est prévu, dans le réseau, au moins un contrôleur de passerelle média (MGC) qui est associé à la passerelle média respective (MG) et **en ce que** l'ensemble d'ordres pour l'interruption non locale du canal utile (12) s'effectue indirectement et est traité de préférence par l'intermédiaire du contrôleur de passerelle média (MGC).

5. Procédé selon la revendication 4, **caractérisé en ce que** le procédé utilise un protocole de contrôle de passerelle média (MGCP) ou un protocole H.248 qui fait office d'interface entre le canal de signalisation et le canal de données utiles et donc entre la passerelle média (MG) et le contrôleur de passerelle média (MGC).

6. Procédé selon au moins l'une des revendications précédentes 4 à 5, **caractérisé en ce que** la communication entre le premier protocole (P1) et le deuxième protocole (P2) s'effectue en interopérabilité avec un troisième protocole (P3) qui sert d'interface pour la communication MGC-MGC, de préférence via le protocole BICC CS2 ou le protocole ISUP+.

7. Procédé selon au moins l'une des revendications précédentes, **caractérisé en ce que** la caractéristique de service (16) est « Call Hold » ou « Terminal Portability ».

8. Procédé selon au moins l'une des revendications précédentes, **caractérisé en ce que** la liaison entre les abonnés (T1, T2) comprend additionnellement un canal de signalisation séparé du canal utile ou des canaux utiles (12) et basé au moins en partie sur IP.

9. Procédé selon au moins l'une des revendications précédentes, **caractérisé en ce que**, si le deuxième abonné (T2) est un abonné analogique ou un abonné RNIS (selon la norme Q.931), un appareil d'accès intégré (IAD) et/ou un adaptateur de terminal multimédia (MTA) et/ou une réponse vocale interactive (Interactive Voice Response, IVR) sont prévus, au lieu ou en plus de la passerelle média (MG), pour regrouper l'ensemble du trafic de données de l'abonné et l'envoyer au centre de commutation suivant.

10. Procédé selon au moins l'une des revendications précédentes, **caractérisé en ce que** le procédé comprend additionnellement l'étape suivante : l'abonné qui n'a pas initialisé la caractéristique de service (12) et qui y fait appel uniquement de manière passive reçoit sur son terminal (14) une communication relative à l'exécution de la caractéristique de service (12) et/ou à une interruption d'un flux média et/ou de charges utiles.

11. Procédé selon au moins l'une des revendications précédentes, **caractérisé en ce que** le deuxième protocole (P2) est élargi par un ensemble d'ordres qui permet l'interruption non locale du canal utile respectif (12) y compris dans le sens de la réception par rapport au premier abonné (T1) .

12. Procédé selon au moins l'une des revendications précédentes, **caractérisé en ce que** l'interruption se produit dans un terminal (14) de l'abonné H.323 (T2) ou, si le deuxième abonné (T2) est un abonné PSTN, dans le contrôleur de passerelle média (MGC) qui lui est associé et la passerelle média (MG) qui lui est associée.

13. Procédé selon au moins l'une des revendications précédentes 2 à 12, **caractérisé en ce que** la communication est reçue par un convertisseur de protocole (MG, MGC) associé au deuxième abonné (T2) et **en ce qu'**est ensuite notifié au deuxième abonné (T2) un ordre (FACILITY) d'interrompre le canal utile (12) qui part du deuxième abonné (T2) si le deuxième abonné (T2) est un abonné H.323.

14. Convertisseur de protocole pour exécuter l'un des procédés ci-dessus, de préférence pour réaliser une interopérabilité d'un premier protocole (P1) d'un premier abonné (T1) avec un deuxième protocole (P2) d'un deuxième abonné (T2) d'un réseau de communication multimédia numérique, comportant :
- au moins un canal utile (12) entre les deux abonnés (T1, T2) en sens d'émission et de réception,
dans lequel :
- le premier protocole (P1) est conçu pour la signalisation dans des réseaux (N1) orientés paquets ou basés sur IP et prévoit, pour des caractéristiques de services (16) qui nécessitent une séparation du canal utile (12), uniquement une séparation locale du canal utile respectif (12) dans le sens de l'émission ; et
- le deuxième protocole (P2) prévoit, pour des caractéristiques de services (16) qui nécessitent une séparation du canal utile (12), au moins optionnellement une séparation locale du canal utile respectif (12) dans le sens de l'émission,
**caractérisé en ce que** le convertisseur de protocole comprend des moyens qui mettent à la disposition du premier abonné (T1) également, un ensemble de caractéristiques de services (16), et de préférence de caractéristiques de services (16) qui nécessitent une séparation du canal utile respectif (12) en sens d'émission et de réception, par le fait que le deuxième abonné (T2) est commandé de manière modifiée dans la mesure où l'émission en direction du premier abonné (T1), et de préférence l'émission d'un flux média sur le canal utile respectif (12), est interrompue.

15. Convertisseur de protocole selon la revendication 14, **caractérisé en ce que** le convertisseur de protocole comprend une passerelle média (MG) et/ou un contrôleur de passerelle média (MGC) s'il se produit un passage du PSTN à l'IP dans le réseau, la communication entre les contrôleurs de passerelle média (MGC) s'effectuant via un troisième protocole (P3), de préférence BICC.

16. Convertisseur de protocole selon au moins l'une des revendications 14 à 15, **caractérisé en ce que** le premier protocole (P1) est un protocole SIP et **en ce que** le deuxième protocole (P2) est un protocole selon la norme H.323 ou **en ce que** le deuxième abonné (T2) est un abonné analogique ou un abonné RNIS.

17. Convertisseur de protocole selon au moins l'une des revendications 14 à 16, **caractérisé en ce que** le convertisseur de protocole est complété par une unité d'élargissement qui élargit le deuxième protocole (P2) par un ensemble d'ordres pour la séparation non locale du canal utile respectif (12) dans le sens de la réception par rapport au premier abonné (T1).

18. Système de réseau de communication multimédia, comprenant préférentiellement :
- un premier réseau (N1) qui est orienté paquets ou basé sur IP et auquel est connecté un premier abonné (T1) qui accède à un premier protocole (P1) qui est conçu pour la signalisation dans des réseaux (N1) orientés paquets ou basés sur IP et prévoit, pour des caractéristiques de services (16) qui nécessitent une séparation du canal utile (12), uniquement une séparation locale du canal utile respectif (12) dans le sens de l'émission ; et
- un deuxième réseau (N2) auquel est connecté un deuxième abonné (T2) qui accède à un deuxième protocole (P2) qui prévoit, pour des caractéristiques de services (16) qui nécessitent une séparation du canal utile (12), au moins optionnellement une séparation locale du canal utile respectif (12) dans le sens de l'émission,
**caractérisé en ce que** le système de réseau met à la disposition du premier abonné (T1) un ensemble de caractéristiques de services (16), et de préférence des caractéristiques de services (16) qui nécessitent une séparation du canal utile respectif (12) en sens d'émission et de réception, par le fait que le deuxième abonné (T2) est commandé de manière modifiée dans la mesure où l'émission en direction du premier abonné (T1), et de préférence l'émission d'un flux média sur le canal utile respectif (12), est interrompue.
